# EUROPÄISCHE PATENTANMELDUNG

(11) **EP 1 104 081 A1**
(43) Veröffentlichungstag der Anmeldung: **30.05.2001**
(21) Anmeldenummer: 00125674.2
(22) Anmeldetag: 23.11.2000
(51) Int. Cl.: H02K 13/08

(54) **Rotor für eine elektrische Maschine**

(30) Priorität: 24.11.1999 DE 19956347
(71) Anmelder: ROBERT BOSCH GMBH, 70442 Stuttgart (DE)
(72) Erfinder: Franz, Peter, 31199 Diekholzen (DE)

(57) **Zusammenfassung**

Die Erfindung betrifft einen Rotor für eine elektrische Maschine, mit einem im Wesentlichen zylinderförmigen Grundkörper, der zur Aufnahme von Stromwenderwicklungen parallel verlaufende Nuten aufweist, in denen Leiterschleifen angeordnet sind, deren Enden über ein Kommutator kontaktierbar sind, wobei die Leiterschleifen von miteinander elektrisch leitend verbundenen, gegeneinander isoliert angeordneten elektrischen Teilleitern gebildet sind, die sich über die axiale Länge des Rotors erstrecken.

Es ist vorgesehen, dass eine Leiterschleife (18) aus zwei Teilleitern (20, 22) besteht, deren antriebsseitige Enden (42, 44) miteinander gefügt sind und deren kommutatorseitige Enden (43, 45) mit jeweils einem weiteren kommutatorseitigen Ende (43, 45) einer weiteren Leiterschleife (18') gefügt sind.

## Beschreibung

Die Erfindung betrifft einen Rotor für eine elektrische Maschine mit den im Oberbegriff des Anspruchs 1 genannten Merkmalen.

### Stand der Technik

Elektrische Maschinen, die Rotoren der gattungsgemäβen Art umfassen, sind bekannt. Diese elektrischen Maschinen können beispielsweise Elektromotoren oder Generatoren sein. Insbesondere fallen hierunter auch als Universalmotor bezeichnete elektrische Maschinen. Aufbau und Funktion derartiger elektrischer Maschinen sind allgemein bekannt. Zur Funktion ist erforderlich, dass in einem Rotor, auch als Läufer oder Anker bezeichnet, über einen Kommutator elektrisch kontaktierbare Stromwenderwicklungen angeordnet sind. Diese Stromwenderwicklungen bestehen aus Leiterschleifen, die in Nuten des Rotors angeordnet sind. Die Leiterschleifen sind im Bereich des Kommutators miteinander elektrisch verbunden, so dass diese über eine Kontaktierungseinrichtung, insbesondere eine Bürstenanordnung, elektrisch kontaktierbar sind. Zur Ausbildung der Leiterschleifen ist bekannt, diese aus einzelnen Leitungsstücken zusammenzusetzen. Aufgrund der speziellen Ausbildung der Leiterschleifen, insbesondere durch einen Übergang vom eigentlichen Rotor in den Kommutatorbereich und die elektrische Verbindung radial übereinander liegender Leiterstücke, kommt es zur Ausbildung sogenannter Wickelköpfe, die stirnseitig an dem Grundkörper des Rotors angeordnet sind. Diese Wickelköpfe übernehmen die elektrische Verbindung der einzelnen, im Rotor angeordneten Leiterstücken.

Aus der US-PS 5,508,566 ist beispielsweise bekannt, eine Leiterschleife aus insgesamt sechs Leiterstücken aufzubauen. Hierdurch kommt es bei der Ausbildung der Stromwenderwicklungen zu insgesamt sieben Fügestellen zwischen den einzelnen Leiterstücken, so dass ein Montageaufwand hoch ist.

### Vorteile der Erfindung

Der erfindungsgemäße Rotor mit den im Anspruch 1 genannten Merkmalen bietet demgegenüber den Vorteil, dass neben einer einfachen Montage eine Reduzierung des durch die Wickelköpfe benötigten Bauraums und der Anzahl der Fügestellen erzielt ist. Dadurch, dass eine Leiterschleife aus zwei Teilleitern besteht, deren antriebsseitige Enden miteinander gefügt sind und deren kommutatorseitige Enden mit jeweils einem weiteren kommutatorseitigen Ende einer weiteren Leiterschleife gefügt ist, lässt sich eine axiale Erstreckung des Wickelkopfes auf einen Leitungsquerschnitt der Teilleiter reduzieren. Insbesondere wird auch ein Montageaufwand erheblich reduziert, da nunmehr nur noch drei Fügestelle pro Leiterschleife vorhanden sind.

In bevorzugter Ausgestaltung der Erfindung ist vorgesehen, dass die Teilleiter von Biegeelementen, Stanzelementen oder Prägeelementen gebildet sind, die eine der Rotorform angepasste Kontur aufweisen. Hierdurch wird vorteilhaft möglich, die Teilleiter mit einfachen, in Massenproduktion sicher beherrschbaren Biegeschritten vorzufertigen, so dass die vorgefertigten Teilleiter in die entsprechenden Nuten im Rotor eingelegt und anschließend untereinander gefügt werden können. Hierdurch wird eine besonders einfache Montage der Rotoren erreicht. Das Fügen der Teilleiter erfolgt vorzugsweise durch Ultraschallschweißen oder Hochenergieschweißen (Laser, Elektronenstrahl). Hierdurch wird eine sichere, elektrisch leitfähige, kraftschlüssige Verbindung zwischen den Teilleitern erhalten.

Weitere bevorzugte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: einen teilweisen Längsschnitt durch einen Rotor einer elektrischen Maschine;
- Figuren 2 bis 5: Schnittansichten des Rotors gemäß Figur 1;
- Figur 2a: eine Detailansicht eines Wickelkopfes;
- Figur 6: eine schematische Perspektivansicht eines Rotors mit einer Leiterschleife und
- Figuren 7 bis 10: Einzeldarstellungen von die Leiterschleife ergebenden Teile.

### Beschreibung des Ausführungsbeispiels

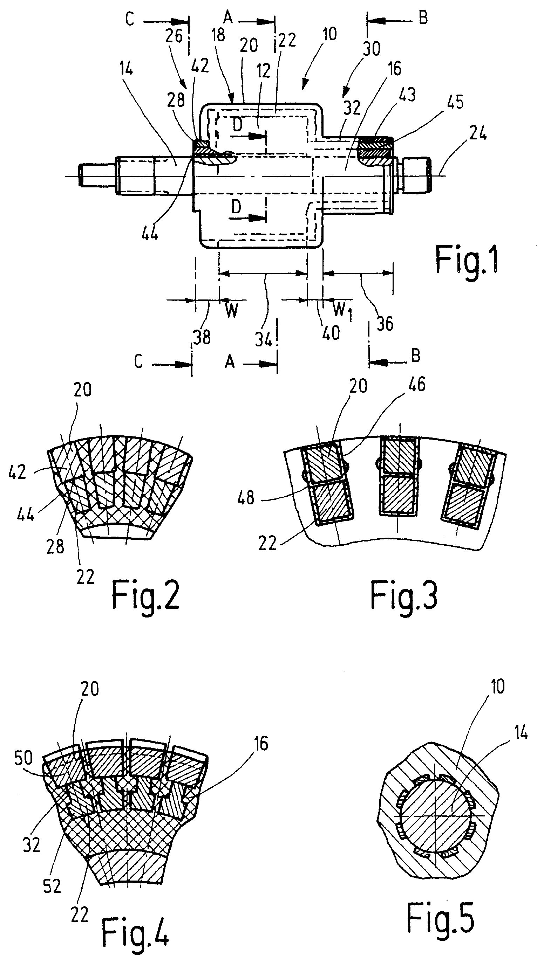

Figur 1 zeigt einen Rotor 10 einer im Einzelnen nicht dargestellten elektrischen Maschine. Der Rotor 10 umfasst einen zylinderförmigen Grundkörper 12, der drehfest auf einer Rotorwelle 14 angeordnet ist. Die Rotorwelle 14 bildet beispielsweise die Antriebswelle eines Elektromotors. Der Grundkörper 12 geht in einen durchmesserkleineren Kommutatorbereich 16 über. In den Grundkörper 12 und den Kommutatorbereich 16 sind Leiterschleifen 18 integriert, die jeweils einen oberen Teilleiter 20 (Oberlagenleiter) und einen unteren Teilleiter 22 (Unterlagenleiter) umfassen. Die Teilleiter 20 und 22 sind - wie später noch näher erläutert wird - in ihrer Formgebung der im Längsschnitt gesehenen Kontur des Rotors 10, insbesondere des Grundkörpers 12 und des Kommutatorbereiches 16, angepasst. Eine Leiterschleife 18 wird jeweils von einem oberen Teilleiter 20 und einem unteren Teilleiter 22 gebildet, wobei die Teilleiter 20 und 22 einer Leiterschleife 18 nicht auf einer Radialebene zu einer Längsachse 24 verlaufen. Direkt radial untereinander beziehungsweise übereinander angeordnet sind immer Teilleiter 20 beziehungsweise 22 von verschiedenen Leiterschleifen. Die Anzahl der Leiterschleifen 18 eines Rotors 10 richtet sich nach elektrischen und mechanischen Parametern der elektrischen Maschine. Die Funktion derartiger Leiterschleifen 18, beispielsweise als Stromwenderwicklungen, in elektrischen Maschinen sind allgemein bekannt, so dass im Rahmen der vorliegenden Beschreibung hierauf nicht näher eingegangen werden soll.

Die zu einer Leiterschleife 18 gehörenden Teilleiter 20 und 22 sind auf einer Antriebsseite 26 an einer Fügestelle 28 elektrisch leitend miteinander verbunden. An einer Kommutatorseite 30 sind die dort liegenden Enden der Teilleiter 20 beziehungsweise 22 mit Enden anderer Leiterschleifen 18' jeweils an einer Fügestelle 32 elektrisch leitend miteinander verbunden. Das Fügen der Leiterelemente 20 und 22 zu den Leiterschleifen 18 kann beispielsweise durch Ultraschallschweißen, Löten, Leitkleben, Laser- und EBM-Schweißen oder andere geeignete Verfahren erfolgen. Außer an den Fügestellen 28 beziehungsweise 30 sind die Teilleiter 20 und 22 elektrisch isoliert gegeneinander angeordnet. Dies kann beispielsweise durch Einhaltung eines Mindestabstandes zwischen den Teilleitern 20 und 22 erfolgen oder durch eine elektrische Isolierung um die Teilleiter 20 und 22, beispielsweise durch einen Isolierlack. In axialer Erstreckung des Rotors 10 ergeben sich vier Abschnitte der Teilleiter 20 beziehungsweise 22. Zunächst ist ein Abschnitt 34 gegeben, der innerhalb des Grundkörpers 12 verläuft. Die im Abschnitt 34 verlaufenden Abschnitte der Teilleiter 20 und 22 sind für eine Drehmomenterzeugung der elektrischen Maschine erforderlich. Die in einem Abschnitt 36 verlaufenden Abschnitte der Teilleiter 20 und 22 dienen der elektrischen Kontaktierung der Leiterschleifen 18, beispielsweise über eine bekannte Bürstenanordnung.

In den Abschnitten 38 beziehungsweise 40 verlaufen die Teilleiter 20 und 22 im Wesentlichen radial zur Längsachse 24 und dienen lediglich der elektrischen Kontaktierung der Abschnitte der Teilleiter 18 und 20 in den Abschnitten 34 beziehungsweise 36. In den Bereichen 38 und 40 erfüllen die Teilleiter 20 und 22 somit Hilfsfunktionen. Die Bereiche 38 und 40 werden als sogenannte Wickelköpfe bezeichnet und besitzen eine axiale Erstreckung w beziehungsweise w₁. Um die gesamte axiale Baulänge des Rotors 10 zu minimieren, soll die Länge w beziehungsweise w₁ der Abschnitte 38 beziehungsweise 40 auf ein notwendiges Minimum reduziert werden. Durch die erfindungsgemäß vorgesehene Ausgestaltung der Leiterschleife 18 beziehungsweise deren Teilleiter 20 und 22 wird die axiale Erstreckung der Abschnitte 38 beziehungsweise 40 auf die erforderlichen elektrischen Querschnitte der Teilleiter 20 beziehungsweise 22 begrenzt.

In den Figuren 2 bis 5 sind jeweils Teilansichten - jeweils im Querschnitt - des Rotors 10 gezeigt. Figur 2 (Schnitt C-C) zeigt hierbei eine Teilansicht im Bereich der Fügestelle 28, Figur 3 (Schnitt A-A) eine Teilansicht im Bereich des Grundkörpers 12, Figur 4 (Schnitt B-B) eine Teilansicht im Bereich der Fügestelle 32 und Figur 5 (Schnitt D-D) eine Teilansicht im Bereich der Rotorwelle 14.

In Figur 2 wird deutlich, dass im Bereich der Fügestelle 28 die Teilleiter 20 und 22 unmittelbar mit ihren Enden 42 beziehungsweise 44 unmittelbar übereinander liegend angeordnet sind und an der Fügestelle 28, beispielsweise durch Ultraschweißen und so weiter, gefügt sind.

Figur 3 verdeutlicht die Anordnung der Teilleiter 20 und 22 in Axialnuten 46 des Grundkörpers 12. Diese Axialnuten 46 besitzen eine derartige Tiefe, dass die übereinander liegenden Teilleiter 20 und 22 bündig mit der Außenfläche des Rotors 10 abschließen. Die Teilleiter 20 und 22 sind mit einer hier angedeuteten Isolierung, beispielsweise einem Isolierlack 48 und/oder einer Isolierfolie, gegeneinander und gegen den elektrischen Grundkörper 12 elektrisch isoliert.

Figur 2a zeigt eine Detailansicht des antriebsseitigen Wickelkopfes. Zur Isolierung der Teilleiter 20 und 22 sind einerseits zwischen mit dem Grundkörper 12 und dem Teilleiter 22 ein Isolierelement (Isolierscheibe 23) und andererseits zwischen dem Teilleiter 20 und dem Teilleiter 22 ein Isolierelement (Isolierscheibe 25) angeordnet. Diese Isolierscheiben 23, 25 sind der entsprechend vorgegebenen Kontur angepasst. Der vorteilhafte Einsatz von Isolierscheiben 23 und 25 gegenüber einem Isolierlack auf den Teilleitern 20 und 22 liegt insbesondere in deren Wärmebeständigkeit beim weiteren Herstellungsprozess.

Figur 4 zeigt wieder übereinander angeordnete Enden 50 beziehungsweise 52 der Teilleiter 20 beziehungsweise 22 im Kommutatorbereich 16 des Rotors 10. Diese sind an den Fügestellen 32 unmittelbar aufeinander liegend angeordnet und beispielsweise durch Ultraschallschweißen gefügt. Hierbei sind jedoch nicht die Enden 50 und 52 einer Leiterschleife miteinander gefügt, sondern das Ende 50 eines Teilleiters 20 gehört zu einer ersten Leiterschleife 18, während das Ende 52 eines Teilleiters 22 zu einer weiteren Leiterschleife 18' gehört. Hierdurch ergibt sich über den Umfang des Rotors 10 betrachtet eine Reihenschaltung der einzelnen Leiterschleifen 18, die entsprechend der Drehstellung des Rotors 10 über die nicht dargestellte Bürstenanordnung abschnittsweise elektrisch kontaktiert sind.

Wie den Schnittdarstellungen in den Figuren 2, 3 und 4 zu entnehmen ist, besitzen die Teilleiter 20 und 22 einen im Wesentlichen rechteckigen Querschnitt. Im Bereich des Wickelkopfes 18 (Figur 2) und des Kommutatorbereichs 16 (Figur 4) ist der Querschnitt im Wesentlichen trapezförmig gewählt. Hierdurch wird erreicht, dass trotz des dort geringer zur Verfügung stehenden Umfanges in Umfangsrichtung beabstandet zueinander angeordnete Teilleiter 20 und 22 nicht kurzgeschlossen sind und größere Drehmomente erzielt werden. Je weiter der Leiter vom axialen Mittelpunkt des Rotors angeordnet ist (Schwerpunkt des Leiters), um so größer ist das wirksame Drehmoment bei gleichem Strom im Leiter.

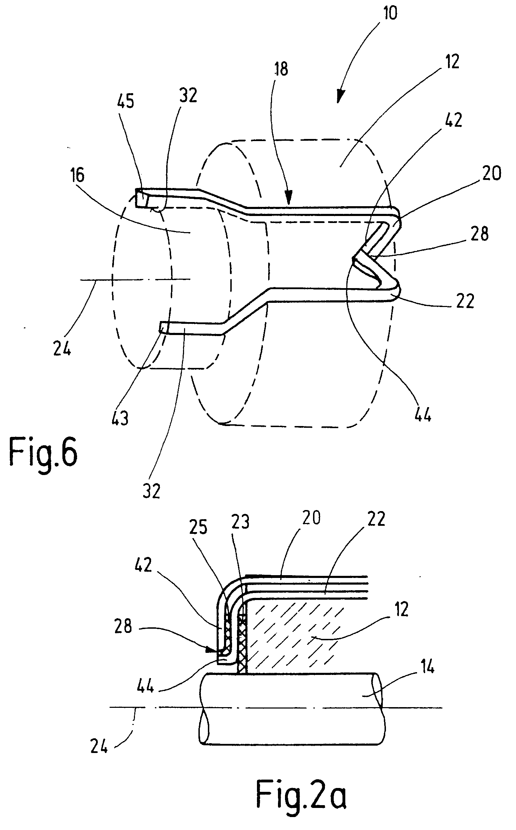

In Figur 6 ist eine schematische Perspektivansicht des Rotors 10 gezeigt. Anhand dieser Ansicht wird der Verlauf einer Leiterschleife 18, das heißt die Zuordnung eines äußeren Teilleiters 20 und eines inneren Teilleiters 22 zu einer Leiterschleife 18, verdeutlicht. In Umfangsrichtung des Rotors 10 betrachtet, verlaufen die Teilleiter 20 und 22 beabstandet zueinander und stehen nur im Bereich der Fügestelle 28 elektrisch leitend miteinander in Kontakt. Über den Gesamtumfang des Rotors 10 sind mehrere der hier dargestellten Leiterschleifen 18 jeweils versetzt zueinander angeordnet. Anhand der Darstellung in Figur 6 wird insbesondere nochmals der einfache Aufbau der Leiterschleife 18 aus den Teilleitern 20 beziehungsweise 22 deutlich. Die Leiterschleife 18 besteht aus lediglich zwei Teilleitern, die durch Biegeschritte eines entsprechend abgelenkten Leitungsmaterials erhalten werden. Durch insgesamt drei Fügestellen kann eine Leiterschleife 18 in die Gesamtanordnung aller Leiterschleifen 18 eingebunden werden. Hierbei ist eine "interne" Fügestelle 28 innerhalb der Leiterschleife 18 erforderlich und zwei "externe" Fügestellen 32 zur Kontaktierung jeweils einer weiteren Leiterschleife. Der Gesamtaufwand zur Herstellung des Rotors 10 reduziert sich somit erheblich.

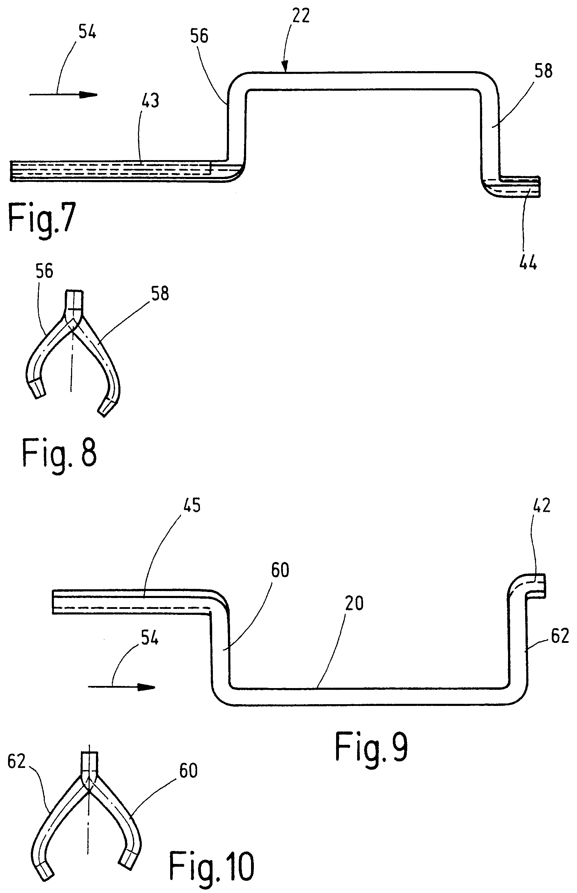

In den Figuren 7 und 8 erfolgt nochmals eine Einzeldarstellung des unteren Teilleiters 22 in einer Seitenansicht (Figur 7) und in einer Draufsicht in Richtung des Kommutatorbereiches 16 des Rotors 10 (Pfeil 54 in Figur 7). Insbesondere anhand der Darstellung in Figur 8 wird deutlich, dass die radial zur Längsbeziehungsweise Drehachse 24 verlaufenden Schenkel 56 beziehungsweise 58 des Teilleiters 22 eine Kurvenform beschreiben, die zur Ausbildung der in Figur 6 gezeigten Leiterschleife 18 führen.

In den Figuren 9 und 10 ist der obere Teilleiter 20 ebenfalls einzeln dargestellt. Hierbei ist Figur 9 eine Seitenansicht und Figur 10 eine Draufsicht in Richtung des Kommutatorbereiches 16. Auch hier beschreiben die radial zur Dreh- beziehungsweise Längsachse 24 verlaufenden Schenkel 60 beziehungsweise 62 eine Kurvenform.

Durch die spezielle Ausgestaltung der Teilleiter 20 und 22 in den Bereichen der Wickelköpfe, also in den Abschnitten 38 und 40, ergibt sich, dass unter der Bedingung, dass in allen Leiterquerschnitten das Verhältnis Strom/Fläche gleich ist, in axialer Richtung am äußeren Umfang die Teilleiter radial breit sein können und axial relativ flach sind, während im inneren Verbindungsbereich die Teilleiter radial schmal und axial länger sein können. Hierdurch wird insgesamt die axiale Abmessung des Rotors 10 verkleinert. Die Wickelköpfe sind hierbei nach Art eines Kegelstumpfes ausgebildet, so dass insgesamt die gesamte axiale Baulänge des Rotors, insbesondere an dessen Außenumfang, verkleinert ist.

Die konkrete Formgestalt der unteren Teilleiter 22 beziehungsweise oberen Teilleiter 20 kann durch aufeinander folgende Biegeschritte erreicht werden. Aufgrund der bekannten erforderlichen Kontur der Teilleiter 20 und 22 können diese automatisiert vorgefertigt werden, so dass diese bei Fertigung des Rotors 10 in die Nuten 46 eingelegt werden können. Anschlieβend erfolgt das Fügen an den Fügestellen 28 beziehungsweise 32.

Es ist klar, dass nach der Biegebearbeitung der Teilleiter 22 und 20, die beispielsweise aus einem strangförmigen Blech- oder Drahtmaterial erfolgen kann, die Isolierung an den notwendigen Bereichen erfolgt. Nach Fügen der Teilleiter 20 und 22 erfolgt die Endbearbeitung des Rotors 10, beispielsweise das Verpressen oder Vergießen des Rotors 10 mit Isolierstoff, das Verpressen der Rotorwelle 14 (Figur 5), mittels an sich bekannter Verfahrensschritte.

## Patentansprüche

1. Rotor für eine elektrische Maschine, mit einem im Wesentlichen zylinderförmigen Grundkörper, der zur Aufnahme von Stromwenderwicklungen parallel verlaufende Nuten aufweist, in denen Leiterschleifen angeordnet sind, deren Enden über ein Kommutator kontaktierbar sind, wobei die Leiterschleifen von miteinander elektrisch leitend verbundenen, gegeneinander isoliert angeordneten elektrischen Teilleitern gebildet sind, die sich über die axiale Länge des Rotors erstrecken, **dadurch gekennzeichnet,** dass eine Leiterschleife (18) aus zwei Teilleitern (20, 22) besteht, deren antriebsseitige Enden (42, 44) miteinander gefügt sind und deren kommutatorseitige Enden (43, 45) mit jeweils einem weiteren kommutatorseitigen Ende (43, 45) einer weiteren Leiterschleife (18') gefügt sind.

2. Rotor nach Anspruch 1, **dadurch gekennzeichnet,** dass die Teilleiter (20. 22) Biegeelemente oder Stanz-, Prägeteile sind, die eine die Rotorform angepasste Kontur besitzen.

3. Rotor nach einem der vorhergehenden Ansprüche, **dadurch gekennzeichnet,** dass die Teilleiter (20, 22) in Längserstreckung des Rotors (10) vier Abschnitte (34, 36, 38, 40) umfassen.

4. Rotor nach einem der vorhergehenden Ansprüche, **dadurch gekennzeichnet,** dass in den Abschnitten (38, 40) die Teilleiter (20, 22) im Wesentlichen radial zu einer Längsachse (24) des Rotors verlaufen.

5. Rotor nach einem der vorhergehenden Ansprüche, **dadurch gekennzeichnet,** dass eine axiale Erstreckung (w, w₁) der Abschnitte (38, 40) dem erforderlichen elektrischen Querschnitt der Teilleiter (20, 22) entspricht.

6. Rotor nach einem der vorhergehenden Ansprüche, **dadurch gekennzeichnet,** dass ein Querschnitt der Teilleiter (20, 22) rechteckig ist.

7. Rotor nach einem der vorhergehenden Ansprüche, **dadurch gekennzeichnet,** dass ein Querschnitt der Teilleiter (20, 22), in denen diese parallel zu einer Längsachse (24) des Rotors (10) verlaufen, trapezförmig ist.

8. Rotor nach einem der vorhergehenden Ansprüche, **dadurch gekennzeichnet,** dass die Abschnitte (34) der Teilleiter (20, 22) in Umfangsrichtung des Rotors (10) beabstandet zueinander verlaufen.

9. Rotor nach einem der vorhergehenden Ansprüche, **dadurch gekennzeichnet,** dass die in den Abschnitten (38, 40) verlaufenden Schenkel (56, 58, 60, 62) der Teilleiter (20, 22) jeweils auf einer Kurvenbahn verlaufen.
